# EUROPEAN PATENT APPLICATION

(11) **EP 4 099 189 A1**
(43) Date of publication of application: **07.12.2022**
(21) Application number: 22175036.7
(22) Date of filing: 24.05.2022
(51) Int. Cl.: G06F 16/953, G06F 16/908

(54) **INFORMATION PROCESSING APPARATUS, INFORMATION PROCESSING SYSTEM, AND COMPUTER-IMPLEMENTED METHOD FOR INFORMATION PROCESSING**

(30) Priority: 31.05.2021 JP 2021091517
(71) Applicant: Ricoh Company, Ltd., Tokyo 143-8555 (JP)
(72) Inventor: IWASAKI, Ryo, Tokyo, 143-8555 (JP)
(74) Representative: SSM Sandmair

(57) **Abstract**

An information processing apparatus (200) includes a search request unit (287) configured to output a search request using first item information as a search key to a search engine, the first item information corresponding to a first item name included in a character string group extracted from form image data; and an identification unit (289) configured to identify second item information corresponding to a second item name included in the character string group, based on a search result acquired from the search engine.

## Description

### BACKGROUND

### Technical Field

The present disclosure relates to an information processing apparatus, an information processing system, and a computer-implemented method for information processing.

### Description of the Related Art

There is known a technique of grouping a character that is hardly read into a set of similar characters, estimating a correct character that matches the character that is hardly read based on a set of candidate characters, and replacing the character that is hardly read with the correct character in a character recognition process. An example of related art is JP-7-200744-A.

For example, when the above-described character recognition process of the related art is applied to form recognition, the accuracy of a character string extracted from a form is not ensured, and the accuracy of the form recognition may decrease.

### SUMMARY

An information processing apparatus according to an embodiment of the present disclosure includes a search request unit that outputs a search request using first item information as a search key to a search engine, the first item information corresponding to a first item name included in a character string group extracted from form image data; and an identification unit that identifies second item information corresponding to a second item name included in the character string group, based on a search result acquired from the search engine.

An information processing system according to another embodiment of the present disclosure includes the above-described information processing apparatus; and a terminal device, the terminal device including a display that displays the recognition result data.

A computer-implemented method for information processing according to still another embodiment of the present disclosure includes outputting a search request using first item information as a search key to a search engine, the first item information corresponding to a first item name included in a character string group extracted from form image data; and identifying second item information corresponding to a second item name included in the character string group, based on a search result acquired from the search engine.

Carrier means according to yet another embodiment of the present disclosure carries a computer readable code for controlling a computer system to carry out the above-described method.

With the technique using the information processing apparatus according to at least one embodiment, the accuracy of the form recognition is further improved.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 illustrates an example of a system configuration of a form recognition system;
FIG. 2A illustrates an example of a hardware configuration of a server apparatus;
FIG. 2B illustrates an example of a hardware configuration of the server apparatus;
FIG. 3 is a table presenting an example of an extraction definition database;
FIG. 4 is a table presenting an example of a dictionary database;
FIG. 5 is a table presenting an example of an extraction result management database;
FIG. 6 is a table presenting an example of a search history management database;
FIG. 7 is a table presenting an example of a tenant database;
FIG. 8A illustrates functions of the server apparatus;
FIG. 8B illustrates functions of a terminal device;
FIG. 9 is a sequence diagram illustrating an operation of the form recognition system according to a first example;
FIG. 10 is a table presenting an example of a job list;
FIG. 11 is a sequence diagram illustrating an operation of the form recognition system according to a second example;
FIG. 12 is a flowchart presenting a process of a form recognition processor according to a first example;
FIG. 13A is a table presenting an example of reading result information;
FIG. 13B is a table presenting the example of the reading result information;
FIG. 14 is a flowchart presenting a process of the form recognition processor according to a second example;
FIG. 15 is a table presenting an example of a corporate information management table;
FIG. 16 is a table presenting updating of item values of the extraction result management database;
FIG. 17 illustrates a first display example;
FIG. 18 illustrates a second display example; and
FIG. 19 illustrates a third display example.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result. Referring now to the drawings, embodiments of the present disclosure are described below. As used herein, the singular forms "a," "an," and "the" are intended to include the plural forms as well, unless the context clearly indicates otherwise.

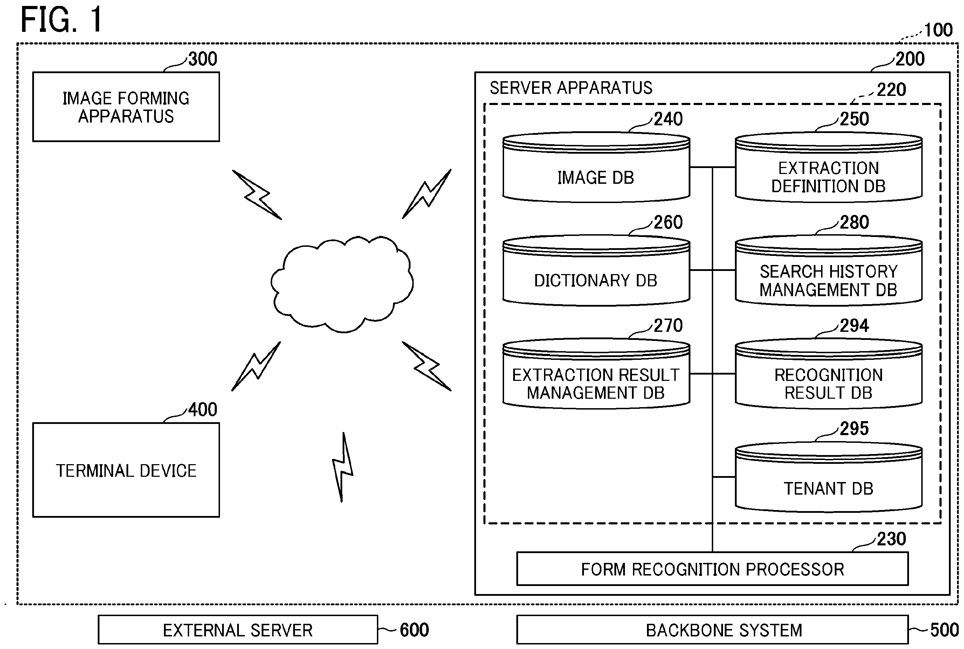

Hereinafter, embodiments will be described referring to the drawings. FIG. 1 illustrates an example of a system configuration of a form recognition system 100.

The form recognition system 100 of the present embodiment includes a server apparatus 200, an image forming apparatus 300, and a terminal device 400. In the form recognition system 100 of the present embodiment, the server apparatus 200, the image forming apparatus 300, and the terminal device 400 are connected to one another via a network.

The server apparatus 200 of the present embodiment communicates with an external server 600 via a network. The external server 600 holds information disclosed to the public.

The terminal device 400 of the present embodiment is connected to a backbone system 500 via, for example, a network. The backbone system 500 performs, for example, a specific process using the result of recognizing a form in the form recognition system 100 of the present embodiment.

In the present embodiment, an invoice is described as an example of the form. In the following description, the form recognition system 100 extracts information including information (invoice information) indicative of a billing source that has issued an invoice and a billing amount from a form image read from the invoice. In one example, the form recognition system 100 may extract description information indicative of a description of the invoice from the form image.

When the form is an invoice, the backbone system 500 may be, for example, an accounting system that performs a transfer by a billing amount to a financial institution.

In the form recognition system 100 of the present embodiment, the server apparatus 200 acquires image data indicative of an image of a form read by a scan function of the image forming apparatus 300. In one example, the server apparatus 200 may receive image data indicative of an image of a form from the terminal device 400.

When the server apparatus 200 acquires the form image data indicative of the image of the form, the server apparatus 200 extracts an item included in the form and a value of the item to obtain text data in which the item and the value of the item are associated with each other.

In the following description, an image of a form is referred to as a form image, and image data indicative of the form image is referred to as form image data.

In the following description, form recognition includes extracting a name of an item (item name) included in a form image and a value (item value) as item information of the item, converting the item name and the item value into text data, and associating the text data of the item name and the text data of the item value with each other.

The server apparatus 200 of the present embodiment includes a memory 220 and a form recognition processor 230. The memory 220 includes an image database 240, an extraction definition database 250, a dictionary database 260, an extraction result management database 270, a search history management database 280, a recognition result database 294, and a tenant database 295.

The image database 240 stores form image data. The extraction definition database 250 stores extraction definition information. The extraction definition information is referred to by the form recognition processor 230 when a character string included in invoice information is extracted from a form image.

The dictionary database 260 stores dictionary information for identifying an issuer of an invoice.

In other words, the dictionary database 260 stores dictionary information for identifying a predetermined item name and a corresponding item value included in a form. The predetermined item name and the corresponding item value represent an issuer of the form. The dictionary information is information input by a user of the form recognition system 100. In other words, the user of the form recognition system 100 creates the dictionary database 260.

The extraction result management database 270 stores the result extracted from the form in a form recognition process performed by the form recognition processor 230. Specifically, the extraction result management database 270 stores an item name and an item value extracted from the form in a manner associated with each other. In one example, the extraction result management database 270 may be provided for each tenant.

The search history management database 280 stores search history information indicative of a history of a search performed in the form recognition process performed by the form recognition processor 230.

The recognition result database 294 stores recognition result data indicative of the result of form recognition performed by the form recognition processor 230. In one example, the recognition result database 294 may be provided for each tenant. The tenant database 295 stores tenant information related to a tenant.

A tenant in the present embodiment is, for example, a company. More specifically, for example, a tenant is a business operator, a company, or a group that has made a contract to use a service that is provided by the form recognition system 100.

The form recognition processor 230 of the present embodiment acquires form image data stored in the image database 240 and performs character recognition to extract a character string group included in a form image of the form image data. The form recognition processor 230 extracts a character string included in invoice information from the character string group with reference to the extraction definition information stored in the extraction definition database 250, and stores the extraction result in the extraction result management database 270.

Furthermore, after the form recognition processor 230 of the present embodiment extracts the invoice information with reference to the extraction definition information, the form recognition processor 230 verifies the reliability of an item value of a specific item name by using the search result with an item value of another item name related to the item value of the specific item name as a search key. Specifically, the form recognition processor 230 searches the dictionary database 260 using the other item value, and verifies the reliability of the item value of the specific item name using the search result.

When the item value of the specific item name has low reliability or when the specific item value has not been extracted, the form recognition processor 230 searches a search engine using the other item value, verifies the reliability of the search result, and identifies the item value of the specific item name in accordance with the verification result.

That is, the form recognition processor 230 of the present embodiment outputs a search request using, as a search key, a first item value corresponding to a first item name (another item name) included in a character string group acquired from the form image data to the search engine. The form recognition processor 230 identifies a second item value corresponding to a second item name (specific item name) included in the character string group by using the search result.

Then, the form recognition processor 230 identifies the identified item value (second item value) as the item value of the specific item name (second item name) stored in the extraction result management database 270.

The form recognition processor 230 of the present embodiment stores, in the recognition result database 294, extraction result information stored in the extraction result management database 270 as part of recognition result data indicative of the result of the form recognition performed by the form recognition processor 230.

In the present embodiment, as described above, in the form recognition, the result of the search of the dictionary database 260 or the search engine using the item name is used to verify whether the item value is a correct value, and the item value is stored in the extraction result management database 270 in a manner that the item value is associated with the item name in accordance with the verification result. In the present embodiment, the extraction result information stored in the extraction result management database 270 is included in recognition result information.

Thus, in the present embodiment, when the invoice information is extracted with reference to the extraction definition information, a correct item value is more likely to be acquired. That is, according to the present embodiment, it is possible to improve the accuracy of the form recognition.

In the following description of the present embodiment, the first item name is an item name "telephone number", and the first item value corresponding to the first item name is an item value of the item name "telephone number". In the following description of the present embodiment, the second item name is an item name "billing source", and the second item value corresponding to the second item name is an item value of the item name "billing source".

A case where the item value of the item name "billing source" is not correctly extracted is, for example, a case where a company seal is stamped on a portion of an invoice with a company name that is an issuer (billing source) of the invoice and a character string indicative of the company name overlaps the company seal. In this case, even when the character recognition is performed using the extraction definition information, the company name that is the item value of the item name "billing source" is not occasionally correctly extracted.

For example, also in a case where a company name is written with a logo or the like instead of a character string, the company name is not occasionally correctly extracted through the character recognition.

In the present embodiment, even when an item value corresponding to an item name is not correctly extracted through the character recognition, the item value that is not correctly extracted is identified based on an item value corresponding to another item name as described above. Thus, according to the present embodiment, it is possible to further improve the accuracy of the form recognition.

In the form recognition system 100 of the present embodiment, the image forming apparatus 300 is a multifunction peripheral having a scan function. The image forming apparatus 300 has installed therein applications for implementing a copy function, a fax function, a scan function, and so forth, and these functions are implemented by selecting an application corresponding to each function.

The terminal device 400 of the present embodiment is used by a user (tenant) who uses the form recognition system 100. The terminal device 400 displays the result of form recognition performed by the server apparatus 200. The terminal device 400 of the present embodiment may be, for example, a tablet terminal or a smartphone.

In the example of FIG. 1, the server apparatus 200 includes the six databases in the memory 220; however, the server apparatus 200 does not have to include the six databases in the memory 220. One or more databases may be provided in an external device of the server apparatus 200, or all databases may be provided in the external device.

In the example of FIG. 1, the server apparatus 200 implements the form recognition processor 230; however, the server apparatus 200 does not have to implement the form recognition processor 230. The form recognition processor 230 may be implemented by a plurality of information processing apparatuses.

In the example of FIG. 1, one image forming apparatus 300 and one terminal device 400 are included in the form recognition system 100; however, any number of image forming apparatuses 300 and any number of terminal devices 400 may be included in the form recognition system 100.

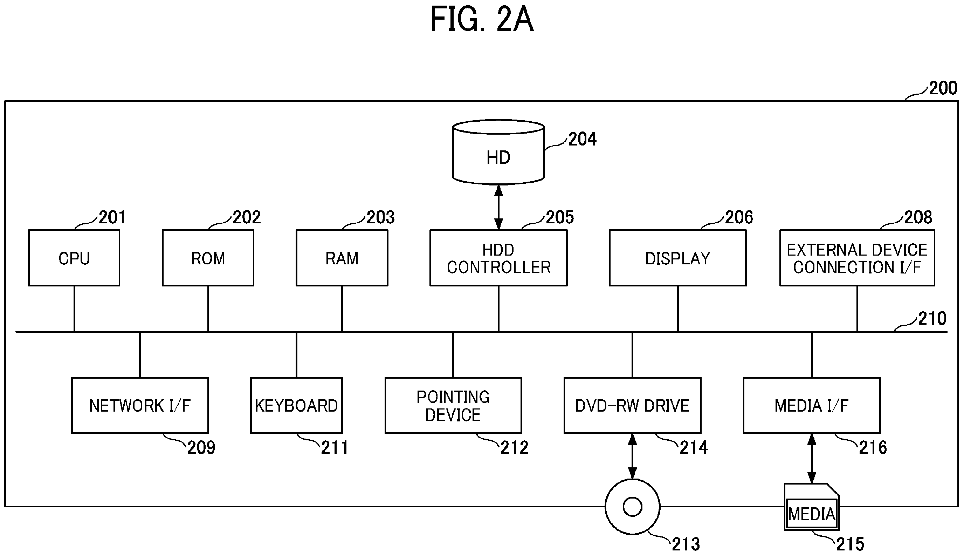

A hardware configuration of the server apparatus 200 of the present embodiment is described next referring to FIG. 2A. FIG. 2A illustrates an example of the hardware configuration of the server apparatus 200.

As illustrated in FIG. 2A, the server apparatus 200 is implemented by a computer. As illustrated in FIG. 2A, the server apparatus 200 includes a central processing unit (CPU) 201, a read-only memory (ROM) 202, a random access memory (RAM) 203, a hard disk (HD) 204, a hard disk drive (HDD) controller 205, a display 206, an external device connection interface (I/F) 208, a network I/F 209, a bus line 210, a keyboard 211, a pointing device 212, a digital versatile disk rewritable (DVD-RW) drive 214, and a media I/F 216.

Among these components, the CPU 201 controls the entire operation of the server apparatus 200. The ROM 202 stores a control program for controlling the CPU 201, such as an initial program loader (IPL). The RAM 203 is used as a work area for the CPU 201. The HD 204 stores various pieces of data such as a control program. The HDD controller 205 controls reading or writing of various pieces of data to or from the HD 204 under control of the CPU 201.

The display 206 displays various pieces of information such as a cursor, a menu, a window, a character, or an image. The external device connection I/F 208 is an interface that couples the server apparatus 200 to various external devices. Examples of the external devices include a Universal Serial Bus (USB) memory and a printer. The network I/F 209 is an interface that controls communication of data through a communication network. The bus line 210 is, for example, an address bus or a data bus that electrically couples the elements such as the CPU 201 illustrated in FIG. 2A.

The keyboard 211 is an example of an input device provided with a plurality of keys for allowing a user to input characters, numerals, or various instructions. The pointing device 212 is an example of an input device that allows the user to select or execute a specific instruction, select a target of a process, or move a cursor being displayed. The DVD-RW drive 214 controls reading or writing of various pieces of data from or to a DVD-RW 213 as an example of a removable recording medium. The removable recording medium is not limited to the DVD-RW and may be a digital versatile disc-recordable (DVD-R) or the like. The media I/F 216 controls reading or writing (storing) of data from or to a storage medium 215 such as a flash memory.

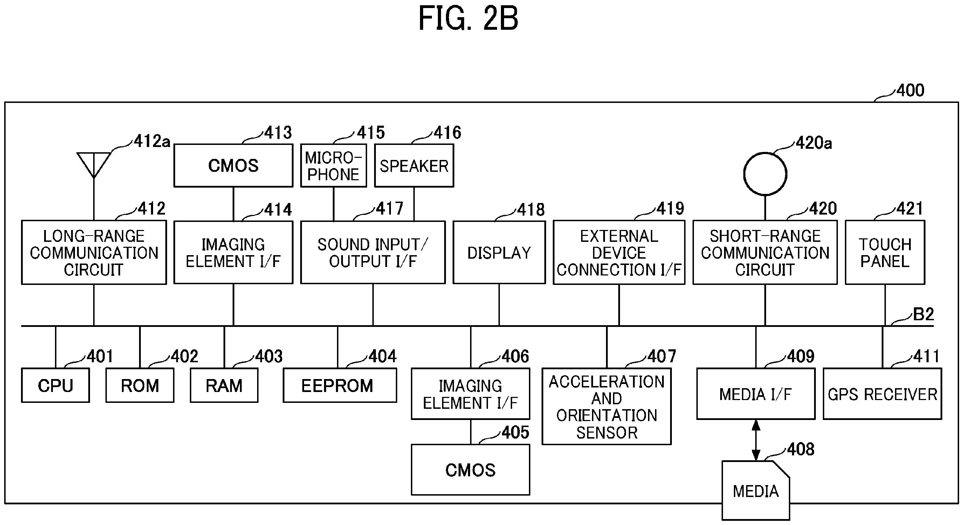

A hardware configuration of the terminal device 400 of the present embodiment is described next referring to FIG. 2B. FIG. 2B illustrates an example of the hardware configuration of the terminal device 400. The terminal device 400 of the present embodiment includes a CPU 401, a ROM 402, a RAM 403, an electrically erasable programmable read-only memory (EEPROM) 404, a complementary metal-oxide semiconductor (CMOS) sensor 405, an imaging element I/F 406, an acceleration and orientation sensor 407, a media I/F 409, and a global positioning system (GPS) receiver 411.

Among these components, the CPU 401 is an arithmetic processing unit that controls the entire operation of the terminal device 400. The ROM 402 stores a control program for controlling the CPU 401, such as an IPL. The RAM 403 is used as a work area for the CPU 401. The EEPROM 404 reads or writes various pieces of data such as a control program for a smartphone under control of the CPU 401. The ROM 402, the RAM 403, and the EEPROM 404 are examples of a storage device of the terminal device 400.

The CMOS sensor 405 is an example of a built-in imaging device configured to capture a subject (mainly, a self-image) under control of the CPU 401 to obtain image data. In alternative to the CMOS sensor 405, an imaging device such as a charge-coupled device (CCD) sensor may be used.

The imaging element I/F 406 is a circuit that controls driving of the CMOS sensor 405. The acceleration and orientation sensor 407 includes various sensors such as an electromagnetic compass for detecting geomagnetism or a gyrocompass, and an acceleration sensor. The media I/F 409 controls reading or writing (storing) of data from or to storage media 408 such as a flash memory. The GPS receiver 411 receives a GPS signal from a GPS satellite.

The terminal device 400 also includes a long-range communication circuit 412, an antenna 412a of the long-range communication circuit 412, a CMOS sensor 413, an imaging element I/F 414, a microphone 415, a speaker 416, a sound input/output I/F 417, a display 418, an external device connection I/F 419, a short-range communication circuit 420, an antenna 420a of the short-range communication circuit 420, and a touch panel 421.

Among these components, the long-range communication circuit 412 communicates with another device through a communication network. The CMOS sensor 413 is an example of a built-in imaging device configured to capture a subject under control of the CPU 401 to obtain image data. The imaging element I/F 414 is a circuit that controls driving of the CMOS sensor 413. The microphone 415 is a built-in circuit that converts sound into an electric signal. The speaker 316 is a built-in circuit that generates sound such as music or voice by converting an electric signal into physical vibration. The sound input/output I/F 417 is a circuit that processes inputting or outputting of a sound signal between the microphone 415 and the speaker 416 under control of the CPU 401.

The display 418 is an example of a display device that displays an image of a subject, various icons, and so forth. Examples of the display 418 include a liquid crystal display (LCD) and an organic electroluminescence (EL) display. The external device connection I/F 419 is an interface that couples the terminal device 400 to various external devices. The short-range communication circuit 420 is a communication circuit that communicates in compliance with the near field communication (NFC), the Bluetooth (registered trademark), or the like. The touch panel 421 is an example of an input device configured to enable the user to operate the terminal device 400 by pressing a screen of the display 418. The display 418 is an example of a displaying unit included in the terminal device 400.

In one example, the terminal device 400 may be a general-purpose computer having the hardware configuration as illustrated in FIG. 2A.

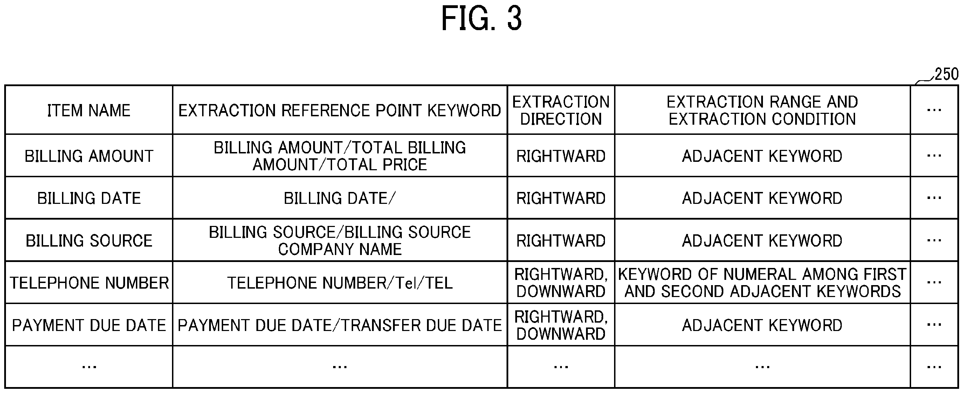

The extraction definition database 250 included in the server apparatus 200 of the present embodiment is described next referring to FIG. 3.

FIG. 3 is a table presenting an example of the extraction definition database 250. FIG. 3 illustrates an example of extraction definition information stored in the extraction definition database 250. For example, the extraction definition information in FIG. 3 may be provided for each tenant in advance.

The extraction definition information includes, as items of information, an item name, an extraction reference point keyword, an extraction direction, and an extraction range and an extraction condition. In the extraction definition database 250, the item "item name" is associated with the other items, and information including the value of the item "item name" and the values of the other items serves as extraction definition information.

The value of the item "item name" indicates an item name associated with an item value. The value of the item "item name" is extracted based on the positional relationship between the item name and a character string indicated by the value of the corresponding item "extraction reference point keyword".

The value of the item "item name" is also an item of information included in invoice information. In the example of FIG. 3, values of the item "item name" include a billing amount, a billing date, a billing source, a telephone number, and a payment due date. These values serve as items of invoice information.

The value of the item "extraction reference point keyword" indicates a character string serving as a reference point when a character string serving as an item value of the item name indicated by the value of the item "item name" is extracted.

The value of the item "extraction direction" indicates the positional relationship between the character string serving as the reference point and the character string serving as the item value of the item name indicated by the value of the item "item name". The value of the item "extraction range and extraction condition" indicates the range and condition of a character string to be extracted.

In FIG. 3, for example, a character string serving as an item value of the item name "billing amount" is a character string located adjacent to a specific character string, such as "billing amount" or "total billing amount", in the right direction in a character string group extracted from a form image. The character string serving as an extraction reference point of the item name "billing amount" may be a character string partially matching the specific character string, such as "billing amount" or "total billing amount".

For example, a character string serving as an item value of the item name "billing date" is a character string located adjacent to a specific character string, such as "billing date", in the right direction in the character string group extracted from the form image.

For example, a character string serving as an item value of the item name "billing source" is a character string located adjacent to a specific character string, such as "billing source" or "billing source company name", in the right direction in the character string group extracted from the form image.

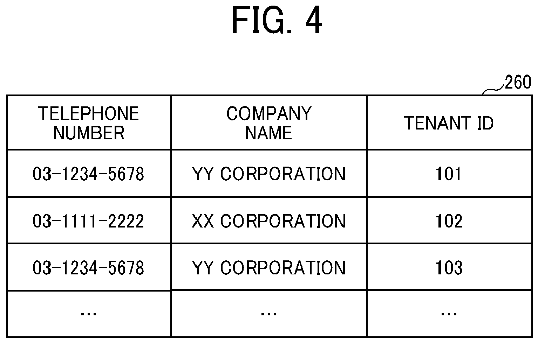

The dictionary database 260 is described next referring to FIG. 4. FIG. 4 is a table presenting an example of the dictionary database 260.

Dictionary information stored in the dictionary database 260 of the present embodiment includes, as items of information, a telephone number, a company name, and a tenant ID, and the respective items are associated with each other. In the present embodiment, information in which the value of the item "telephone number", the value of the item "company name", and the value of the item "tenant ID" are associated with one another is dictionary information. The dictionary information of the present embodiment is information re-input by a tenant with respect to the recognition result of a form displayed on the terminal device 400.

The value of the item "telephone number" indicates a telephone number of an issuer of an invoice. The value of the item "company name" indicates a company name of the issuer of the invoice. The value of the item "tenant ID" is identification information for identifying a user (tenant) of the form recognition system 100.

In the example of FIG. 4, a telephone number "03-1234-5678" is associated with a company name "YY Corporation" and a tenant ID "101", and it is found that the dictionary information is input with the tenant ID "101".

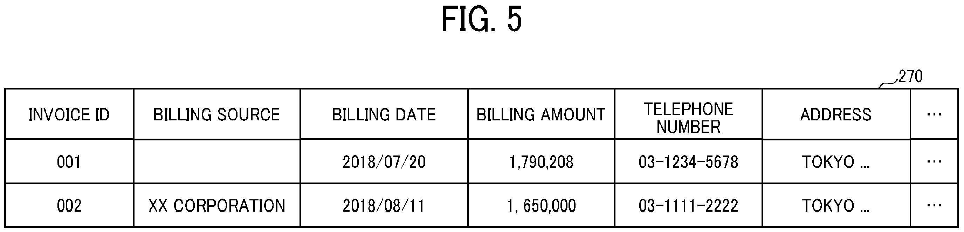

The extraction result management database 270 is described next referring to FIG. 5. FIG. 5 is a table presenting an example of the extraction result management database 270. The extraction result management database 270 may be provided for each tenant.

Extraction definition information is generated each time when the form recognition processor 230 performs a form recognition process. The extraction definition information includes item names and item values extracted from form image data through the form recognition process performed by the form recognition processor 230.

The extraction definition information stored in the extraction result management database 270 includes, as items of information, an invoice ID, a billing source, a billing date, a billing amount, a telephone number, an address, and so forth. In the extraction definition information, the item "invoice ID" is associated with the other items.

The value of the item "invoice ID" is identification information for identifying an invoice. The value of the item "billing source" indicates a name of a billing source extracted from the form image data through the form recognition process. The value of the item "billing date" indicates a billing date extracted from the form image data through the form recognition process.

The value of the item "billing amount" indicates a billing amount extracted from the form image data through the form recognition process. The value of the item "telephone number" indicates a telephone number of the billing source extracted from the form image data through the form recognition. The value of the item "address" indicates an address of the billing source extracted from the form image data through the form recognition process.

In the extraction definition information of the present embodiment, when an item value is not extracted through the form recognition process, the item value corresponding to the item name is blank.

In the example of FIG. 5, in extraction definition information identified with an invoice ID "002", item values are stored for all item names. In contrast, the item value of the item "billing source" is not stored in extraction definition information identified with an invoice ID "001". Thus, it is found that the name of the billing source has not been extracted through the form recognition process on form image data of an invoice identified with the invoice ID "001".

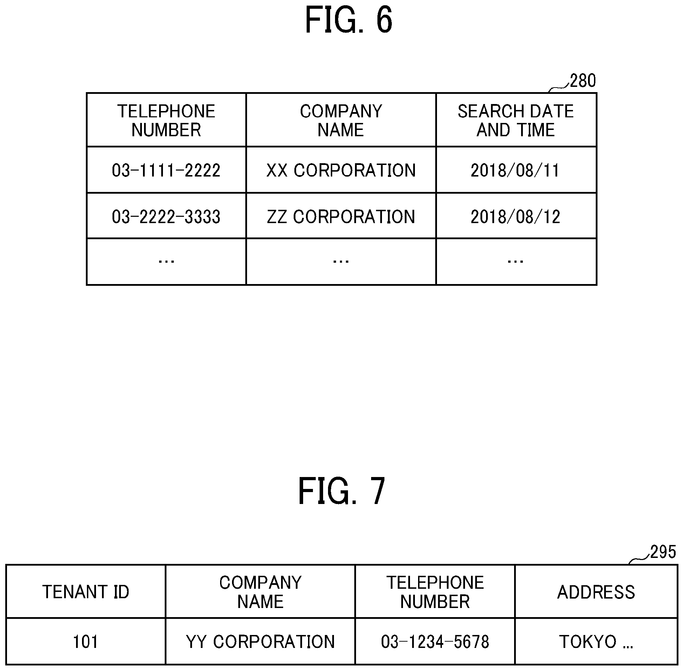

The search history management database 280 of the present embodiment is described next referring to FIG. 6. FIG. 6 is a table presenting an example of the search history management database 280.

Search history information that is stored in the search history management database 280 of the present embodiment is stored in the search history management database 280 when the form recognition processor 230 identifies an item value of an item name based on the search result using a search engine.

The search history information includes, as items of information, a telephone number, a company name, a search date and time, and so forth, which are associated with each other.

The value of the item "telephone number" indicates a telephone number stored in the extraction result management database 270, and serves as a search key for the search engine. The value of the item "company name" indicates a name of a billing source acquired as the search result of the search engine. The value of the item "search date and time" indicates a date and time at which the form recognition processor 230 made a search request to the search engine.

The tenant database 295 of the present embodiment is described next referring to FIG. 7.

FIG. 7 illustrates an example of the tenant database 295. The tenant database 295 of the present embodiment may be stored in the server apparatus 200 in advance.

Tenant information stored in the tenant database 295 includes, as items of information, a tenant ID, a company name, a telephone number, an address, and so forth, and the item "tenant ID" is associated with the other items.

The value of the item "tenant ID" is identification information for identifying a tenant. In other words, the tenant ID is identification information for identifying a user of the form recognition system 100. The value of the item "company name" indicates a name of the tenant. In other words, the item "company name" indicates a name of the user.

The value of the item "telephone number" and the value of the item "address" indicate a telephone number and an address of the tenant identified with the tenant ID.

In one example, the tenant information may include items other than the items presented in FIG. 7. Specifically, for example, the tenant information may include information related to a financial institution used by the tenant.

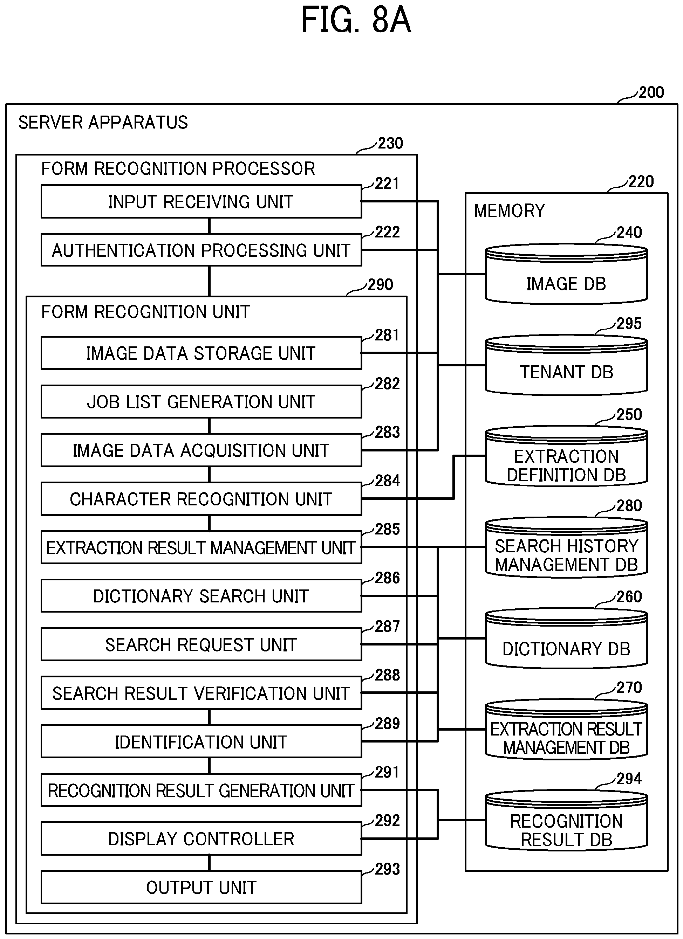

Functions of the server apparatus 200 are described next referring to FIG. 8A. FIG. 8A illustrates the functions of the server apparatus 200.

In the server apparatus 200 of the present embodiment, for example, the CPU 201 reads and executes an information processing program stored in the HD 204 or the like to implement functions of components (described later).

The server apparatus 200 of the present embodiment includes the form recognition processor 230. The form recognition processor 230 includes an input receiving unit 221, an authentication processing unit 222, and a form recognition unit 290.

The input receiving unit 221 receives various inputs to the server apparatus 200. Specifically, the input receiving unit 221 receives an input of login information for allowing a user to log in to the form recognition system 100. The login information includes, for example, a tenant ID and a password. The input receiving unit 221 also receives, for example, an input of form image data transmitted from the image forming apparatus 300.

The authentication processing unit 222 performs authentication based on the login information whose input has been received by the input receiving unit 221. For example, the authentication processing unit 222 may transmit the input login information to an authentication server provided outside the server apparatus 200, and acquire the result of authentication by the authentication server. When the user is authenticated, the authentication processing unit 222 may pass the form image data received by the input receiving unit 221 to the form recognition unit 290.

The form recognition unit 290 of the present embodiment includes an image data storage unit 281, a job list generation unit 282, an image data acquisition unit 283, a character recognition unit 284, an extraction result management unit 285, a dictionary search unit 286, a search request unit 287, a search result verification unit 288, an identification unit 289, a recognition result generation unit 291, a display controller 292, and an output unit 293.

When the image data storage unit 281 receives form image data from the image forming apparatus 300, the image data storage unit 281 stores the form image data in the image database 240. When the image data storage unit 281 receives form image data from the terminal device 400, the image data storage unit 281 stores the form image data in the image database 240.

The job list generation unit 282 registers a job in a job list when the input receiving unit 221 receives an input of form image data from the image forming apparatus 300, and manages the job list. The details of the job list will be described later.

The image data acquisition unit 283 acquires form image data stored in the image database 240.

The character recognition unit 284 extracts a character string and information indicative of a position at which the character string is arranged from the form image data and holds the character string and the information indicative of the position as reading result information. Thus, the reading result information includes a plurality of character strings extracted from form image data. In the following description, a plurality of character strings extracted from form image data and included in reading result information may be referred to as a character string group.

The details of the reading result information will be described later.

The extraction result management unit 285 manages extraction result information stored in the extraction result management database 270. Specifically, the extraction result management unit 285 stores a plurality of character strings extracted from the form image data as extraction result information in which the character strings are associated in terms of item names and item values, in the extraction result management database 270. When an item value is identified through a search of the dictionary database 260 or the search engine, the extraction result management unit 285 updates the extraction result information stored in the extraction result management database 270.

The dictionary search unit 286 searches the dictionary database 260 using an item value included in the extraction result information as a search key. Specifically, the dictionary search unit 286 searches the dictionary database 260 using a telephone number included in the extraction result information as a search key.

The search request unit 287 outputs a search request to a search engine on the Internet using an item value included in the extraction result information as a search key.

The search result verification unit 288 verifies whether the search result obtained by the dictionary search unit 286 is correct. The search result verification unit 288 verifies whether the search result obtained by the search engine is correct. In other words, the search result verification unit 288 verifies the reliability of the search result.

The identification unit 289 identifies an item value to be stored as the extraction result information in accordance with the verification result obtained by the search result verification unit 288.

The recognition result generation unit 291 generates recognition result data including invoice information included in the extraction result information.

The display controller 292 controls displaying on a screen of such as the terminal device 400. Specifically, the display controller 292 may generate screen data indicative of a recognition result confirmation screen to be displayed on the terminal device 400.

The output unit 293 outputs the screen data indicative of the recognition result confirmation screen generated by the display controller 292 to the terminal device 400. In other words, the output unit 293 causes the recognition result confirmation screen generated by the display controller 292 to be displayed on a Web browser (displaying unit) of the terminal device 400. The output unit 293 converts the recognition result data into data in a format compliant with the backbone system 500, and outputs the converted data.

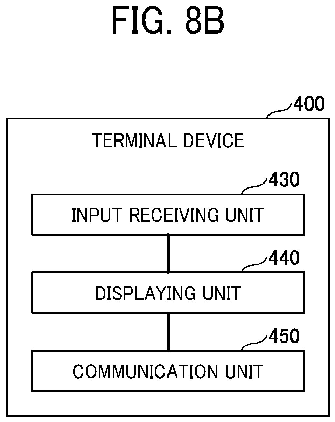

Functions of the terminal device 400 are described next referring to FIG. 8B. FIG. 8B illustrates the functional configuration of the terminal device 400.

The terminal device 400 of the present embodiment includes an input receiving unit 430, a displaying unit 440, and a communication unit 450. The input receiving unit 430 receives various inputs to the terminal device 400. The displaying unit 440 controls displaying on the display 418 of the terminal device 400. The displaying unit 440 may be implemented by, for example, a browser or the like, or may be implemented by an application or the like for using the form recognition system 100. The communication unit 450 transmits or receives information between the terminal device 400 and another device.

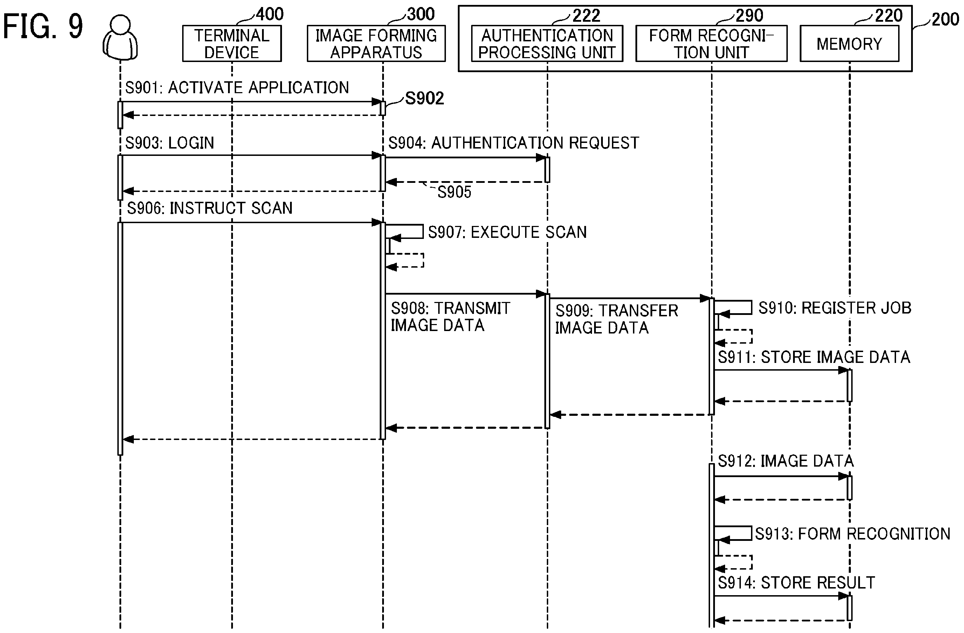

An operation of form recognition in the form recognition system 100 of the present embodiment is described next referring to FIG. 9. FIG. 9 is a sequence diagram illustrating an operation of the form recognition system 100 according to a first example.

In the form recognition system 100, in response to receiving an activation request of an application for performing form recognition from a user (step S901), the image forming apparatus 300 activates the application (step S902). The user is, for example, an administrator of a tenant.

In response to receiving an input of login information including a tenant ID from the user (step S903), the image forming apparatus 300 transmits the login information to the server apparatus 200 and makes an authentication request (step S904).

In response to receiving the authentication request, the authentication processing unit 222 of the server apparatus 200 performs authentication and informs the image forming apparatus 300 of the result (step S905). In this case, an operation when the user is authenticated is illustrated.

Then, the image forming apparatus 300 receives a scan instruction for a form (step S906), scans the form, and acquires form image data (step S907). Then, the image forming apparatus 300 transmits the form image data to the server apparatus 200 (step S908).

In the server apparatus 200, when the input receiving unit 221 receives the input of the form image data, the authentication processing unit 222 passes the form image data to the form recognition unit 290 (step S909). In the example of FIG. 8, the form image data is passed to the form recognition unit 290 via the authentication processing unit 222; however, the form image data does not have to be passed via the authentication processing unit 222. The form image data may be passed to the form recognition unit 290 without passing through the authentication processing unit 222.

In response to receiving the form image data, the job list generation unit 282 of the form recognition unit 290 of the server apparatus 200 registers a job in a job list (step S910). Then, the image data storage unit 281 of the form recognition unit 290 stores the form image data in the image database 240 (step S911).

Then, the image data acquisition unit 283 of the form recognition unit 290 acquires form image data to be recognized from the image database 240 (step S912) and executes a process of recognizing the form image (step S913).

Specifically, the form recognition unit 290 of the present embodiment extracts invoice information from a character string group included in reading result information acquired by the character recognition unit 284, and the recognition result generation unit 291 generates recognition result data including the invoice information. The details of the process in step S913 will be described later.

Then, the form recognition unit 290 stores the recognition result data generated by the recognition result generation unit 291 in the recognition result database 294 (step S914), and the process of form recognition is ended.

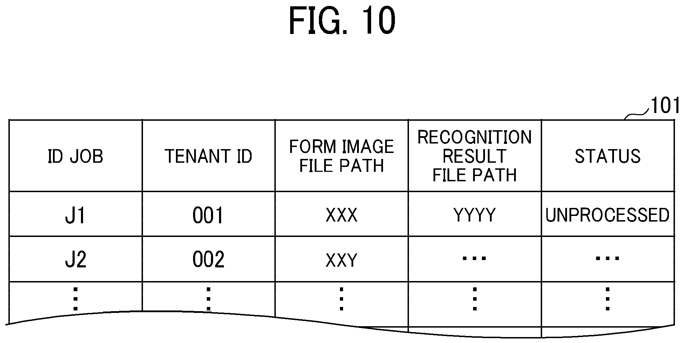

A job list generated by the job list generation unit 282 of the present embodiment is described referring to FIG. 10. FIG. 10 is a table presenting an example of the job list.

In the server apparatus 200 of the present embodiment, when form image data is input from the image forming apparatus 300, the job list generation unit 282 holds the form image data in association with a job ID as a job list.

A job list 101 of the present embodiment includes, as items of information, a job ID, a tenant ID, a form image file path, a recognition result file path, and a status.

The value of the item "job ID" is identification information for identifying a job. In other words, the value of the item "job ID" is identification information for identifying form image data received from the image forming apparatus 300. The value of the item "form image file path" is information indicative of a location where the form image data is stored. The value of the item "recognition result file path" is information indicative of a location where recognition result data of the result of recognizing the form image is stored.

The value of the item "status" indicates a progress of recognition of the form image by the user (tenant).

In other words, the value of the item "status" indicates a state of the job.

In the present embodiment, the values of the item "status" include four states of an unprocessed state, a draft stored state, a determined state, and an external output completed state. The respective states are as follows. In one example, the value of the item "status" may be included in the recognition result data.

The unprocessed state (state 1) is a state that is immediately after recognition result data has been acquired through form recognition and in which, for example, confirmation of the recognition result data has not been performed.

The draft stored state (state 2) is a state that is in the middle of an operation such as the confirmation of the recognition result data and is before the recognition result data is determined.

The determined state (state 3) is a state in which the operation such as the confirmation of the recognition result data has been completed and the confirmed recognition result data has been stored in the recognition result database 294 as determined information.

The external output completed state (state 4) is a state in which outputting of the recognition result data to an accounting system or the like that cooperates with the form recognition system 100 has been completed.

When the server apparatus 200 of the present embodiment receives form image data from the image forming apparatus 300, the job list generation unit 282 assigns a job ID, acquires the job ID as login information, associates the login information with a tenant ID, and adds the record to the job list 101. When form image data is stored in the image database 240, the job list generation unit 282 adds information indicative of a storage destination as the value of the item "form image file path".

Furthermore, when form definition information for reference is identified through recognition of the form image, the job list generation unit 282 adds a definition ID thereof as the value of the item "definition ID". When processing on the job list 101 is completed and the recognition result data is stored in the recognition result database 294, the job list generation unit 282 adds information indicative of the storage destination as the value of the item "recognition result file path" and sets the value of the item "status" to completed.

In the present embodiment, for example, a job list generated by the job list generation unit 282 may be displayed. In this case, the user can confirm the progress of recognition of a form image via a job list screen displayed based on the job list.

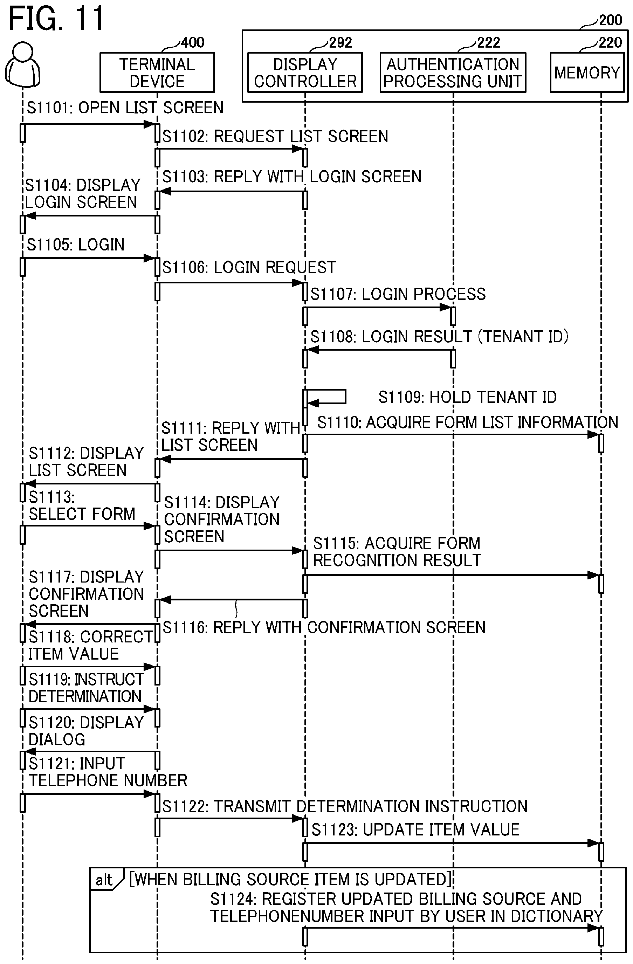

An operation of the form recognition system 100 when recognition result data is displayed is described next referring to FIG. 11. FIG. 11 is a sequence diagram illustrating an operation of the form recognition system 100 according to a second example.

In the form recognition system 100, in response to receiving a display instruction for a list of forms from the user (step S1101), the terminal device 400 transmits an acquisition request for a list screen of forms to the server apparatus 200 (step S1102).

In response to receiving the acquisition request for the list screen, the display controller 292 of the server apparatus 200 transmits a display instruction for a login screen to the terminal device 400 (step S1103).

In response to receiving the display instruction, the terminal device 400 displays the login screen (step S1104).

In response to receiving an input of login information including a tenant ID from the user (step S1105), the terminal device 400 transmits a login request together with the login information to the server apparatus 200 (step S1106). Hereinafter, a case where a tenant is authenticated based on the login information will be described.

In response to receiving the login request, the authentication processing unit 222 of the server apparatus 200 executes an authentication process (step S1107), and returns, as the login result, an authenticated tenant ID to the display controller 292 (step S1108).

The display controller 292 holds the tenant ID (step S1109), and acquires information indicative of a list of invoices (forms) corresponding to the tenant ID from the memory 220 (step S1110). Specifically, the display controller 292 acquires the information indicative of the list of invoices with reference to the recognition result database 294 corresponding to the tenant ID.

Then, the display controller 292 of the server apparatus 200 transmits a display instruction for the information indicative of the list of invoices to the terminal device 400 (step S1111).

In response to receiving the display instruction, the terminal device 400 displays a list screen indicative of the list of invoices (step S1112).

In response to receiving a selection of an invoice on the list screen (step S1113), the terminal device 400 transmits a display request for a confirmation screen of recognition result data to the server apparatus 200 (step S1114). The display request includes an invoice ID for identifying the invoice selected on the list screen.

In response to receiving the display request for the confirmation screen, the display controller 292 of the server apparatus 200 acquires recognition result data corresponding to the invoice ID received together with the display request from the memory 220 (step S1115).

Then, the display controller 292 transmits a display instruction for a confirmation screen of the recognition result data to the terminal device 400 (step S1116).

In response to receiving the display instruction, the terminal device 400 displays the confirmation screen for the recognition result data (step S1117).

Described here with reference to FIG. 11 is, for example, a case where an item value of the item name "billing source" is corrected on the confirmation screen.

In response to receiving correction of an item value or designation of an extraction position of an item value by the user (step S1118) and receiving an operation of determination (step S1119), the terminal device 400 displays a dialog box (step S1120). The item value whose correction has been received in this case is the item value of the item name "billing source". The dialog box displayed in this case is a dialog box for allowing the user to input dictionary information to be stored in the dictionary database 260.

Then, when a telephone number is input to the dialog box (step S1121), the terminal device 400 transmits a determination instruction to instruct the server apparatus 200 to determine a progress of the recognition of the form image (step S1122).

In response to receiving the determination instruction, the server apparatus 200 updates an item value before correction to an item value after correction in the extraction result information corresponding to the invoice ID of the selected invoice, included in the extraction result information stored in the extraction result management database 270 (step S1123).

In response to receiving correction of the item value in step S1118, the server apparatus 200 stores information in which the corrected item value, the telephone number, and the tenant ID are associated with one another as dictionary information in the dictionary database 260 (step S1124).

In response to receiving designation of the extraction position of the item value in step S1118, the server apparatus 200 may store the item name and information indicative of the extraction position of the item value as new extraction definition information in the extraction definition database 250.

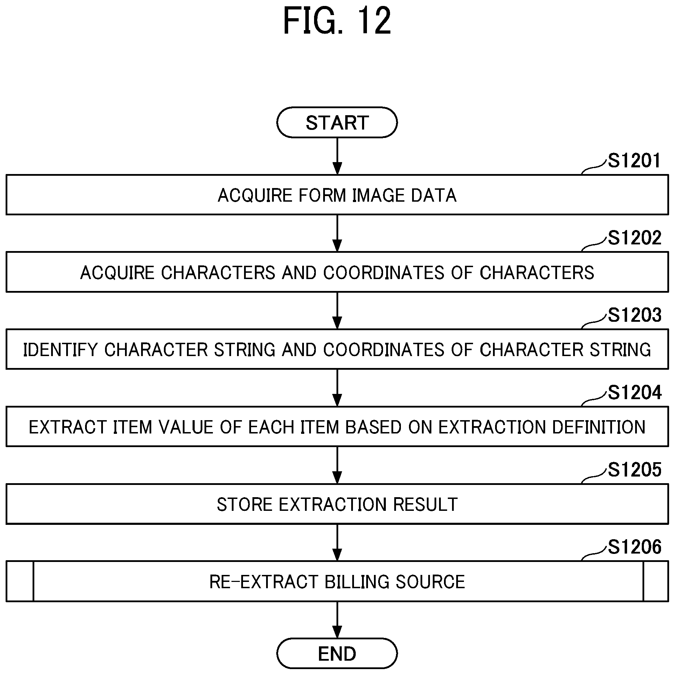

The operation of the form recognition system 100 has been described above. A process of the form recognition processor 230 is described next referring to FIGs. 12 to 16.

FIG. 12 is a flowchart presenting a process of the form recognition processor 230 according to a first example. FIG. 12 presents the details of the process of the form recognition processor 230 in step S913 in FIG. 9.

The image data acquisition unit 283 of the form recognition unit 290 of the present embodiment acquires form image data from the image database 240 (step S1201).

Then, the character recognition unit 284 of the form recognition unit 290 cuts out a region with characters formed (hereinafter, referred to as character field) from the form image, cuts out and recognizes the characters in the cut character field, and acquires coordinates indicative of the positions of the cut out characters (step S1202).

Then, the form recognition unit 290 generates reading result information based on the positional relationship of the respective characters recognized by the character recognition unit 284, and identifies a character string and coordinates of the character string (step S1203). The details of the reading result information will be described later.

Then, the extraction result management unit 285 of the form recognition unit 290 refers to the extraction definition database 250 and extracts an item name and a corresponding item value based on the extraction definition information (step S1204).

Then, the extraction result management unit 285 of the form recognition processor 230 stores the extraction result in the extraction result management database 270 (step S1205).

Then, the form recognition processor 230 re-extracts the item value of the item name "billing source" (step S1206), and ends the process of form recognition. The details of the process in step S1206 will be described later.

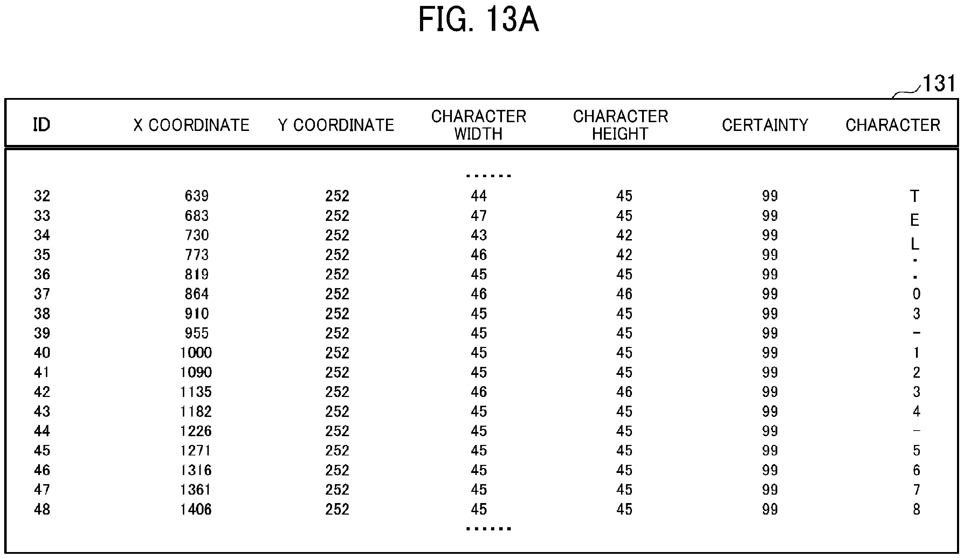

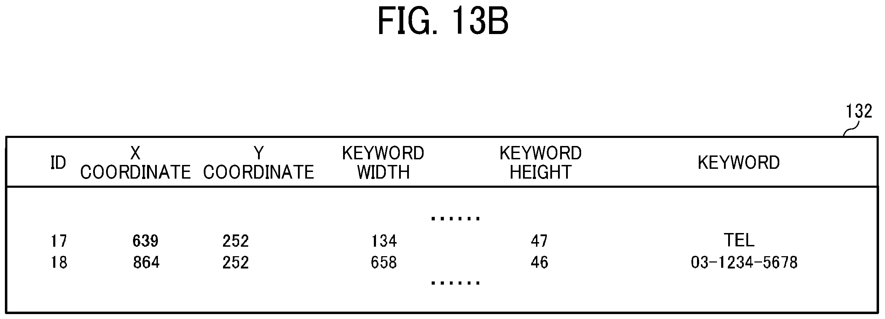

Character recognition is further described next referring to FIGs. 13A and 13B. FIGs. 13A and 13B are tables presenting an example of reading result information.

Information 131 presented in FIG. 13A is the result of character recognition performed by the character recognition unit 284 on form image data.

The information 131 presents an example of extraction from the result of cutting out a character field and recognizing characters in the character field, and the coordinates indicating the positions of the characters.

The character recognition unit 284 of the present embodiment connects characters at adjacent positions to recognize a character string from the information 131. Specifically, the character recognition unit 284 may recognize a combination of characters as a word, the characters being arranged such that the distances between the characters are within predetermined pixels.

Information 132 presented in FIG. 13B is information indicating character strings recognized by the character recognition unit 284 and regions of the character strings, and is reading result information on the form image obtained by the character recognition unit 284.

Moreover, the character recognition unit 284 recognizes a region divided by vertical lines and horizontal lines as one cell from the form image data, and assigns identification information (cell ID) for identifying a cell to each cell.

The information 132 presented in FIG. 13B is information indicative of association between a region of each cell recognized from the form image and a cell ID.

In FIG. 13B, for example, the region where the character string "TEL" is recognized is identified based on the height and width with reference to the position indicated by the X coordinate and the Y coordinate in the information 132.

Also in the information 132, it is found that the region where the character string "TEL" is recognized is included in a cell ID "17". Thus, the character string "TEL" is associated with the cell ID "17" as a character string included in the reading result information.

The form recognition unit 290 of the present embodiment associates the character string with the cell from the form image data in this way.

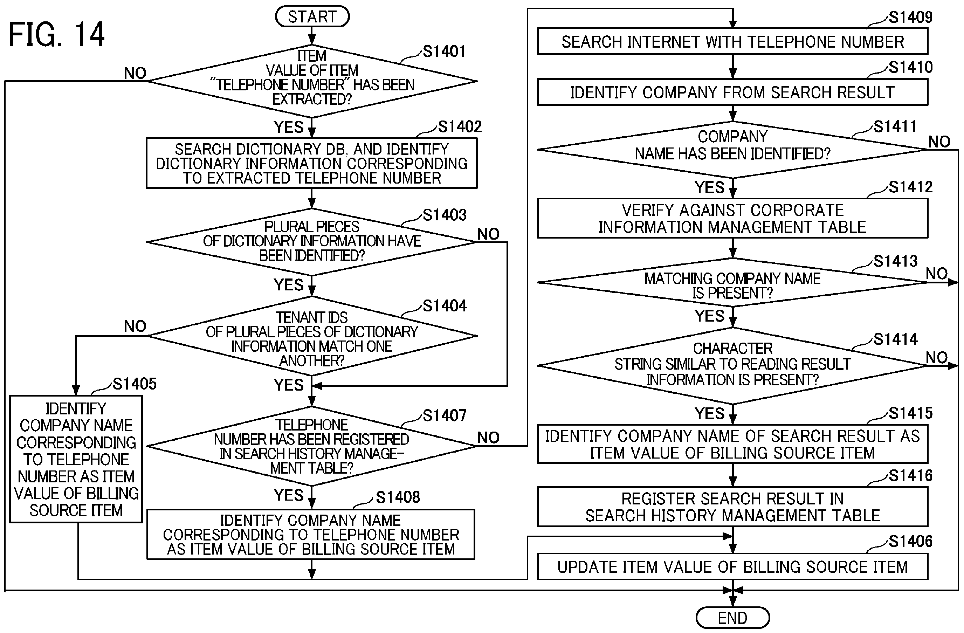

A process of the form recognition processor 230 in step S1206 in FIG. 12 is described next referring to FIG. 14. FIG. 14 is a flowchart presenting a process of the form recognition processor 230 according to a second example. FIG. 14 illustrates a process of re-extracting the value of the item name "billing source" after the character recognition unit 284 performs the character recognition.

The process from step S1401 to step S1406 is a process using the search results of the dictionary database 260.

The extraction result management unit 285 of the form recognition processor 230 of the present embodiment determines whether the item value of the item name "telephone number" has been extracted (step S1401). When the corresponding item value has not been extracted in step S1401, the form recognition processor 230 ends the process.

When the corresponding item value has been extracted in step S1401, the dictionary search unit 286 of the form recognition processor 230 searches the dictionary database 260 using the extracted telephone number as a search key, and identifies dictionary information including the search key (step S1402).

Then, the search result verification unit 288 of the form recognition processor 230 determines whether a plurality of pieces of dictionary information have been identified in step S1402 (step S1403). When a plurality of pieces of dictionary information have not been identified in step S1403, that is, when the identified dictionary information represents one record, the form recognition processor 230 proceeds to step S1407 (described later).

When a plurality of pieces of dictionary information have been identified in step S1403, the search result verification unit 288 determines whether tenant IDs included in the identified plurality of pieces of dictionary information match each other (step S1404). When the tenant IDs match each other in step S 1404, the form recognition processor 230 proceeds to step S1407 (described later).

When the tenant IDs do not match each other in step S1404, the identification unit 289 of the form recognition processor 230 identifies a company name included in the dictionary information acquired as the search result as the item value of the item name "billing source" (step S1405).

Then, the extraction result management unit 285 of the form recognition processor 230 updates the corresponding item value in the extraction result stored in the extraction definition database 250 to the item value identified in step S1405 (step S1406), and the form recognition processor 230 ends the process.

That is, as an example of the present embodiment, the search result verification unit 288 determines that the telephone number and the corresponding company name are credible information when dictionary information in which the same telephone number and the same company name are associated with each other has been registered in the dictionary database 260 by a plurality of different tenants. In other words, the credible information is information that is unlikely to be erroneous and is highly reliable.

For example, it is assumed that a tenant identified with a tenant ID "101" and a tenant identified with a tenant ID "103" store dictionary information in which the telephone number "03-1234-5678" is associated with the company name "YY Corporation" in the dictionary database 260 (see FIG. 4).

In this case, when the dictionary database 260 is searched using the telephone number "03-1234-5678" as a search key, the dictionary information including the tenant ID "101" and the dictionary information including the tenant ID "103" are extracted as the search results. In the pieces of dictionary information, the tenant IDs do not match each other. Thus, the two tenants individually associate the telephone number "03-1234-5678" with the company name "YY Corporation".

Thus, the search result verification unit 288 determines that the item value of the item name "telephone number" serving as the search key has been correctly extracted, and the company name associated with the telephone number is also credible information.

The process using the search result of the dictionary database 260 has been described above. A process from step S1407 to step S1416 described next is a process using the search results of the search engine.

When a plurality of pieces of dictionary information have not been identified in step S1403, the search request unit 287 of the form recognition processor 230 determines whether search history information including the telephone number serving as the search key has been stored in the search history management database 280 (step S1407). That is, in this case, the form recognition processor 230 determines whether a search using the search engine has been performed using the telephone number serving as the search key in the past.

When the search history information including the corresponding telephone number has been stored in the search history management database 280 in step S1407, the identification unit 289 of the form recognition processor 230 identifies, as the item value of the item name "billing source", the company name associated with the telephone number serving as the search key (step S1408), and the process proceeds to step S1406.

When the search history information including the corresponding telephone number has not been stored in the search history management database 280 in step S1407, the search request unit 287 of the form recognition processor 230 outputs a search request using the telephone number as the search key to the search engine on the Internet, and acquires the search result (step S1409).

Then, the identification unit 289 of the form recognition processor 230 identifies the company name from the search result (step S1410).

Specifically, the identification unit 289 divides each of the top ten search results acquired from the search engine into a plurality of keywords using a delimiter such as a comma or a space. Then, the identification unit 289 may identify a keyword in a format that can be considered as a company name from the plurality of keywords. The keyword in the format that can be considered as a company name is, for example, a keyword including corporation, company, Co., or Ltd.

When a plurality of company names are present in the search result, the company name that appears most frequently may be the search result of the search engine.

Then, the form recognition processor 230 determines whether the company name has been identified in step S1410 (step S1411). When the company name has not been identified in step S1411, the form recognition processor 230 ends the process.

In the present embodiment, when the keyword in the format that can be considered as the company name is not present in the plurality of keywords included in the search result, it may be determined that the company name has not been identified.

When the company name has been identified in step S1411, the search result verification unit 288 of the form recognition processor 230 verifies the identified company name against a corporate information management table stored in the external server 600 or the like (step S1412).

The corporate information management table is described below. The corporate information management table of the present embodiment is information disclosed to the public and is managed by, for example, the National Tax Agency. In the present embodiment, for example, the external server 600 may be managed by the National Tax Agency or the like, and the corporate information management table may be stored in the external server 600.

The corporate information stored in the corporate information management table includes identification information for identifying a corporation, a corporation name (company name), and so forth. The details of the corporate information management table will be described later.

The search result verification unit 288 of the form recognition processor 230 determines whether the company name matching the company name identified in step S1410 is present in the corporate information management table (step S1413). That is, in this case, it is determined whether the company name identified through the search of the search engine is the name of an actual company.

When the matching company name is not present in step S1413, the form recognition processor 230 ends the process.

When the matching company name is present in step S1413, the search result verification unit 288 of the form recognition processor 230 determines whether a character string similar to the company name identified in step S1410 is present in the reading result information (step S1414).

When the reading result information includes a character string similar to the company name identified in the process up to step S1413, it can be said that the issuer of the invoice (billing source) is the tenant indicated by the identified company name.

That is, in this case, it is determined whether the company name identified in the process up to step S1413 is the issuer of the invoice indicated by the image data acquired in step S1201 in FIG. 12.

Specifically, the search result verification unit 288 determines whether a character string similar to a character string obtained by removing the characters "corporation" from the identified company name is present in character strings excluding the character string "corporation" among the character strings included in the reading result information. For example, the search result verification unit 288 may determine a character string matching the character string obtained by removing the characters "corporation" from the identified company name by 50% or more as a similar character string.

When a similar character string is not present in step S1414, the form recognition processor 230 ends the process.

When a similar character string is present in step S1414, the identification unit 289 identifies the company name acquired as the search result by the search request unit 287 as the item value of the item name "billing source" (step S1415).

Then, the form recognition processor 230 generates search history information in which the company name identified in step S 1415, the telephone number serving as the search key, and the date and time at which the search request has been made are associated with one another, stores the search history information in the search history management database 280 (step S 1416), and proceeds to step S1406.

The process using the search result acquired from the search engine has been described above.

In the present embodiment, when the search result of the search engine is used, the item value of which the search result is highly reliable is verified by a plurality of methods. Then, the item value is identified in accordance with the verified result.

Thus, according to the present embodiment, it is possible to improve the accuracy of extraction of the item value for the item name from the form image data, and it is possible to improve the accuracy of the form recognition.

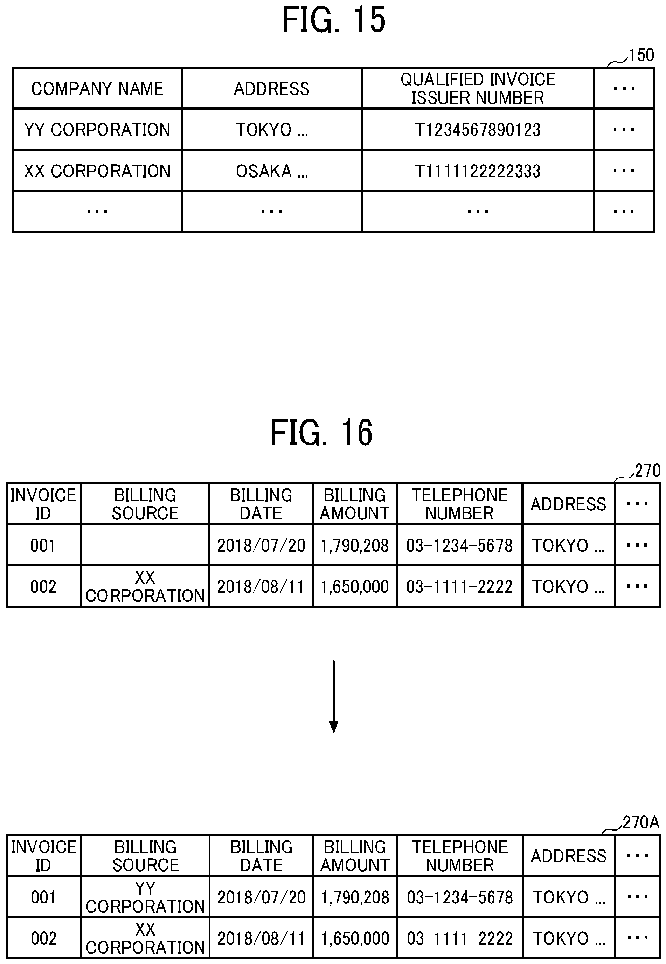

A corporate information management table 150 is described next referring to FIG. 15. FIG. 15 is a table presenting an example of the corporate information management table 150.

The corporate information management table 150 presented in FIG. 15 includes, as items of information, a company name, an address, a qualified invoice issuer number, and so forth.

The value of the item "qualified invoice issuer number" is an identification number assigned to a business operator (tenant) that can issue a qualified invoice. In the present embodiment, an invoice issued by a tenant may include a qualified invoice issuer number. The qualified invoice is a way for a seller to inform a buyer of an accurate applied tax rate, a consumed tax amount, and so forth.

In the present embodiment, the company name identified from the search result of the search engine is verified against the corporate information management table 150 to determine whether the company name identified from the search result of the search engine is the name of an actual company.

A process of updating an item value in step S1406 in FIG. 14 is described next in detail referring to FIG. 16. FIG. 16 is a table presenting updating of item values of an extraction result management database 270.

The extraction result management database 270 presented in FIG. 16 is similar to the extraction result management database 270 presented in FIG. 5.

At this time, in the extraction result management database 270, it is found that the item value of the item name "billing source" is blank, and the item value of the item name "billing source" has not been extracted through character recognition, from the invoice identified with the invoice ID "001".

In this case, the form recognition processor 230 of the present embodiment searches the dictionary database 260 with the item value "03-1234-5678" of the item name "telephone number". In the dictionary database 260 of the present embodiment, dictionary information including the item value "03-1234-5678" and having a different tenant ID is extracted as the search result. Thus, in the extraction result management database 270, the item value of the item name "billing source" of the extraction result information including the invoice ID "001" is the company name "YY Corporation" associated with the item value "03-1234-5678" in the dictionary information of the search result.

In an extraction result management database 270A presented in FIG. 16, the item value of the item name "billing source" of the extraction result information including the invoice ID "001" is updated to "YY Corporation".

In the present embodiment, the result of re-extracting the item value of the item name "billing source" is included in the recognition result data. Thus, according to the present embodiment, the item value of the item name "billing source" is more likely to be extracted as the result of the form recognition.

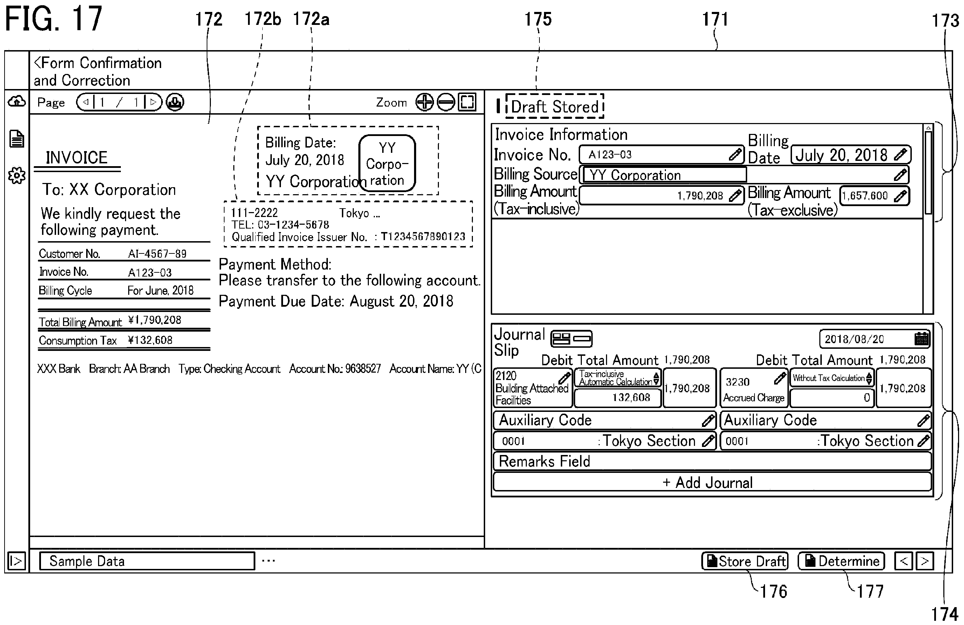

Display examples according to the present embodiment are described next referring to FIGs. 17 to 19. FIG. 17 illustrates a first display example of the terminal device 400.

A screen 171 illustrated in FIG. 17 is an example of a confirmation screen displayed on the terminal device 400 in step S1117 in FIG. 11.

The screen 171 includes display fields 172, 173, 174, and 175 and operation buttons 176 and 177.

In the display field 172, a form image presented by form image data is displayed. In the example of FIG. 17, the form is an invoice, and the form image includes a region 172a indicative of a company name of a billing source, and a region 172b indicative of an address, a telephone number, and a qualified invoice issuer number of the billing source.

The display field 173 displays recognition result data that is the result of form recognition performed by the form recognition unit 290 on the form image data indicative of the form image displayed in the display field 172. Specifically, in the display field 173, invoice information extracted from the form image data indicative of the form image displayed in the display field 172 is displayed. In one example, information other than the invoice information may be displayed in the display field 173. Specifically, for example, description information indicative of the content of the invoice may be displayed.

In the display field 174, an input field for inputting a journal for the form image (invoice image) displayed in the display field 172 is displayed.

In the display field 175, the value of the item "status" of the job list 101 is displayed.

The operation button 176 is for changing the value of the status of the job list 101 from the unprocessed state to the draft stored state. When the operation button 176 is operated in the state in which "unprocessed" is displayed in the display field 175, the displaying of the display field 175 changes from "unprocessed" to "draft stored".

The operation button 177 is for changing the value of the status of the job list 101 to the determined state. In the present embodiment, when the operation button 177 is operated, the value of the status of the job list 101 is changed to the determined state. In the present embodiment, the recognition result data whose status is in the determined state can be converted by the output unit 293 into data in a format compliant with the backbone system 500.

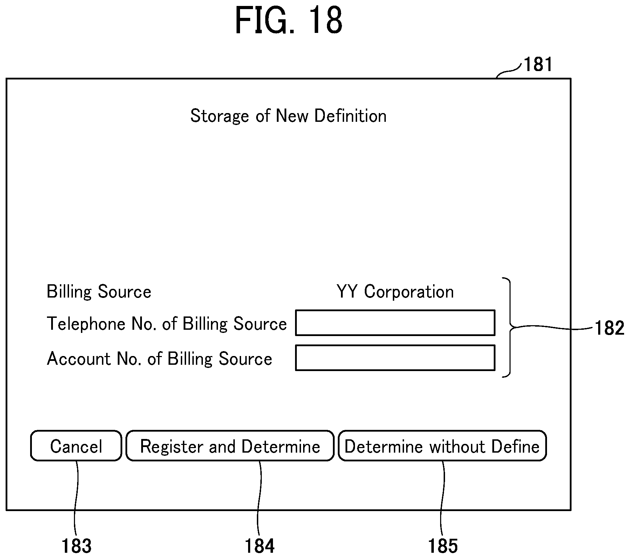

FIG. 18 illustrates a second display example of the terminal device 400. A dialog box 181 illustrated in FIG. 18 is an example of a dialog box displayed on the terminal device 400 in step S1120 in FIG. 11.

The dialog box 181 is displayed on the screen 171 when the display field of the item value of the item name "billing source" is selected in the display field 173 of the screen 171 illustrated in FIG. 17.

The dialog box 181 includes an input field 182 and operation buttons 183, 184, and 185. A telephone number of the billing source and an account number of the billing source are input to the input field 182.

The operation button 183 is for cancelling an input. The operation button 184 is for storing dictionary information in which the telephone number input to the input field 182 is associated with the billing source and determining the state of the recognition result data. The operation button 185 is for determining the state of the recognition result data without registration in the dictionary information.

In the present embodiment, in response to an operation on the operation button 184 in the dialog box 181, the dictionary database 260 may be updated, and the displaying of the display field 175 of the screen 171 may be changed to "determined".

As described above, according to the present embodiment, in form recognition, a search result using, as a search key, a first item value corresponding to a first item name included in a character string group extracted through character recognition is used to verify the reliability of a second item value corresponding to a second item name included in the character string group. In the present embodiment, when the reliability of the second item value is low or when the second item value has not been acquired, the second item value is identified using the search result with the first item value of the first item name as the search key.

At this time, the first item name and the second item name are desirably in a relationship of being uniquely associated with each other. Specifically, for example, the first item name is a telephone number of an issuer of a form, and the second item name is the issuer of the form. In one example, the first item name may be an address, and the second item name may be a billing source. In another example, the first item name may be a qualified invoice issuer number, and the second item name may be a billing source.

In the present embodiment, a search request may be made to a search engine on the Internet using the first item value as a search key, or the dictionary database 260 may be searched.

Furthermore, in the present embodiment, the reliability of a search result is verified. Since the second item value is identified in accordance with the verified result, it is possible to prevent an erroneous value from being identified as the second item value, and it is possible to improve the accuracy of the form recognition.

In the present embodiment, when a list screen of forms is displayed, the list screen may be displayed in a manner that recognition result data including an item value identified using the search result by the search engine is visually recognizable.

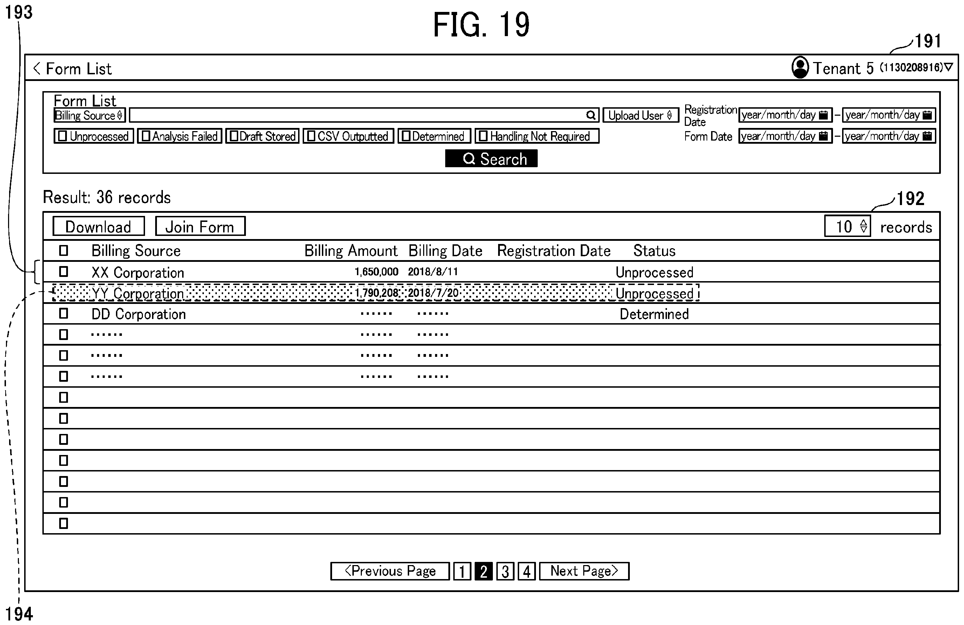

FIG. 19 illustrates a third display example of the terminal device 400. A screen 191 illustrated in FIG. 19 is an example of a list screen of forms displayed on the terminal device 400 in step S1112 in FIG. 11.

In a display field 192 of the screen 191, a list of records indicative of part of invoice information is displayed as a list of forms. Specifically, in the display field 192, a billing source, a billing amount, a billing date, a status, and so forth are displayed.

In the example of FIG. 19, the item value of the billing source of a record 193 is an item value considered such that the reliability of a character string acquired through character recognition is high. In contrast, the item value of the billing source of a record 194 is an item value identified from the search result of a search engine.

In FIG. 19, the record 193 and the record 194 have different display forms. In the present embodiment, as described above, a record whose item value has been acquired from an information source other than form image data may be displayed in a visually recognizable manner on the list screen of forms. Displaying a confirmation screen in this way can urge a user to pay attention when the user views the confirmation screen.

Each of the functions of the described embodiments can be implemented by one or more processing circuits or circuitry. Examples of the "processing circuits or circuitry" in the specification include a programmed processor, as a processor that is mounted on an electronic circuit and that performs the functions through software. Examples of the "processing circuits or circuitry" also include devices such as an application specific integrated circuit (ASIC), a digital signal processor (DSP), a field programmable gate array (FPGA), and conventional circuit components arranged to perform the recited functions.

The group of the apparatuses and devices described in the embodiments is merely one example of plural computing environments that implement one or more embodiments disclosed in the specification.

In one embodiment, the server apparatus 200 includes a plurality of computing devices, such as a server cluster. The plurality of computing devices are configured to communicate with each other via any type of communication link, including a network, a shared memory, or the like and perform the processes disclosed in the specification. Likewise, the server apparatus 200 may include a plurality of computing devices configured to communicate with each other.

Further, the server apparatus 200 can be configured to share the disclosed processing steps in various combinations. For example, a process executed by the server apparatus 200 may be executed by another server apparatus. Similarly, a function of the server apparatus 200 can be executed by another server apparatus. Respective elements of the server apparatus and the other server apparatus may be integrated into one server apparatus or may be divided into a plurality of apparatuses.

The correspondence tables in the specification may be generated through a learning effect of machine learning. Moreover, by classifying keywords and account items that may be included in the description of the transaction content through machine learning, the correspondence tables need not be used.

Machine learning is a technology for allowing a computer to obtain learning ability like a human. The technology autonomously generates an algorithm required for a computer to make determination such as identification of data from learning data acquired in advance, applies the algorithm to new data, and performs prediction. Any suitable learning method is applied for machine learning, for example, any one of supervised learning, unsupervised learning, semi-supervised learning, reinforcement learning, and deep learning, or a combination of two or more those learning methods. Any learning method may be employed for machine learning.

Any one of the above-described operations may be performed in various other ways, for example, in an order different from the one described above. The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In one aspect, the present invention may reside in an information processing system of any one of the claims, and a terminal device including a display configured to display the recognition result data.

In one aspect, the present invention may reside in a recording medium that stores a computer readable code for controlling a computer system to carry out a method for information processing, which includes outputting a search request using first item information as a search key to a search engine, the first item information corresponding to a first item name included in a character string group extracted from form image data; and identifying second item information corresponding to a second item name included in the character string group, based on a search result acquired from the search engine.

## Claims

1. An information processing apparatus (200) comprising:
a search request unit (287) configured to output a search request using first item information as a search key to a search engine, the first item information corresponding to a first item name included in a character string group extracted from form image data; and
an identification unit (289) configured to identify second item information corresponding to a second item name included in the character string group, based on a search result acquired from the search engine.

2. The information processing apparatus (200) according to claim 1,
wherein the identification unit (289) is configured to use, as the second item information, a character string acquired as the search result when a character string similar to the character string acquired as the search result is present in the character string group.

3. The information processing apparatus (200) according to claim 1 or 2,
wherein the search request unit (287) outputs the search request when the second item information has not been extracted from the form image data.

4. The information processing apparatus (200) according to any one of claims 1 to 3, further comprising:
a memory (220) configured to store dictionary information that associates an item name, item information, and identification information for identifying a user; and
a dictionary search unit (286) configured to search the memory (220) using the first item information as a search key, the dictionary search unit (286) being configured to output the search request when a plurality of pieces of dictionary information are acquired in the search result and respective pieces of the identification information included in the plurality of pieces of dictionary information differ from one another.

5. The information processing apparatus (200) according to any one of claims 1 to 4,
wherein the first item name and the second item name are uniquely associated with each other.

6. The information processing apparatus (200) according to any one of claims 1 to 5,
wherein the form image data is image data indicative of an image of an invoice, and
wherein the first item name is a telephone number of a billing source included in the invoice, and the second item name is the billing source of the invoice.

7. The information processing apparatus (200) according to any one of claims 1 to 6, further comprising:
a display controller (292) configured to cause a terminal device to display recognition result data including the first item name and the first item information, and the second item name and the second item information.

8. An information processing system (100) comprising:
a search request unit (287) configured to output a search request using first item information as a search key to a search engine, the first item information corresponding to a first item name included in a character string group extracted from form image data;
an identification unit (289) configured to identify second item information corresponding to a second item name included in the character string group, based on a search result acquired from the search engine; and
a terminal device (400) configured to display at a display the recognition result data.

9. A computer-implemented method for information processing, the method comprising:
outputting (S1409) a search request using first item information as a search key to a search engine, the first item information corresponding to a first item name included in a character string group extracted from form image data; and
identifying (S1410) second item information corresponding to a second item name included in the character string group, based on a search result acquired from the search engine.

10. The computer-implemented method according to claim 9,
wherein the identifying (S1410) includes using (S1415), as the second item information, a character string acquired as the search result when a character string similar to the character string acquired as the search result is present in the character string group.

11. The computer-implemented method according to claim 9 or 10,
wherein the outputting (S1409) includes outputting the search request when the second item information has not been extracted from the form image data.

12. The computer-implemented method according to any one of claims 9 to 11, further comprising:
storing, in a memory (220), dictionary information that associates an item name, item information, and identification information for identifying a user; and
searching the memory (220) using the first item information as a search key,
wherein the outputting (S1409) includes outputting the search request when a plurality of pieces of dictionary information are acquired in the search result and respective pieces of the identification information included in the plurality of pieces of dictionary information differ from one another.

13. The computer-implemented method according to any one of claims 9 to 12,
wherein the first item name and the second item name are uniquely associated with each other.

14. The computer-implemented method according to any one of claims 9 to 13,
wherein the form image data is image data indicative of an image of an invoice, and
wherein the first item name is a telephone number of a billing source included in the invoice, and the second item name is the billing source of the invoice.

15. The computer-implemented method according to any one of claims 9 to 13, further comprising:
causing a terminal device to display recognition result data including the first item name and the first item information, and the second item name and the second item information.
